# EUROPÄISCHE PATENTANMELDUNG

(11) **EP 3 988 991 A1**
(43) Veröffentlichungstag der Anmeldung: **27.04.2022**
(21) Anmeldenummer: 21203785.7
(22) Anmeldetag: 20.10.2021
(51) Int. Cl.: G02C 5/22, G02C 5/16, G02C 5/14

(54) **FASSUNG EINER BRILLE**

(30) Priorität: 20.10.2020 AT 509012020
(71) Anmelder: Lasnik, Gerald, 8580 Köflach (AT)
(72) Erfinder: Lasnik, Gerald, 8580 Köflach (AT)
(74) Vertreter: Wirnsberger & Lerchbaum Patentanwälte OG

(57) **Zusammenfassung**

Die Erfindung betrifft die Fassung (1) einer Brille, wobei die Fassung (1) einen Mittelteil (2) und zumindest einen Bügel (3) aufweist, der mit dem Mittelteil (2) verbunden ist. Erfindungsgemäß ist vorgesehen, dass der Bügel (3) federnd ausgebildet und gelenkfrei am Mittelteil (2) gelagert ist oder der Bügel (3) mit einem federnden Verbindungsteil am Mittelteil (2) gelagert ist.

Des Weiteren betrifft die Erfindung eine Verwendung einer solchen Fassung (1) und ein Verfahren zu deren Herstellung.

## Beschreibung

Die Erfindung betrifft die Fassung einer Brille, wobei die Fassung einen Mittelteil und zumindest einen Bügel aufweist, der mit dem Mittelteil verbunden ist.

Des Weiteren betrifft die Erfindung eine Verwendung eines Sets aus einer Vielzahl von Mittelteilen und Bügeln sowie optional Verbindungsteilen.

In einem weiteren Aspekt betrifft die Erfindung ein Verfahren zur Herstellung einer Fassung einer Brille, wobei ein Mittelteil und zumindest ein Bügel miteinander verbunden werden.

Für viele Menschen stellen Brillen im täglichen Lebensbedarf ein unverzichtbares Mittel zur Bewältigung vieler Lebenssituationen dar. Dies trifft insbesondere dann zu, wenn alternative Mittel zum Ausgleich einer Sehschwäche, insbesondere optische Linsen, nicht angewendet werden können und/oder Operationen zur dauerhaften Beseitigung einer Sehschwäche nicht infrage kommen.

In den letzten Jahrzehnten haben sich Brillen technisch und ästhetisch sehr stark weiterentwickelt. In technischer Hinsicht sind heute Brillen in sehr einfachen und kostengünstigen Varianten teilweise bereits in Supermärkten erhältlich. Mit zunehmender technischer Raffinesse, beginnend von klappbaren über zusammensteckbare bis hin zu unzerbrechlichen Brillen, steigen in der Regel auch die Kosten einer Brille an. Letzteres trifft auch in ästhetischer Hinsicht zu: Einfache Massenware wie Lesebrillen mit einer Fassung aus einem wenig haltbaren Kunststoff sind in einem untersten Preissegment angesiedelt, wohingegen technisch aufwendigere, vor allem aber ästhetisch ansprechendere, nach Möglichkeit ein Unikat darstellende Brillen die oberen Preissegmente bilden.

Die Brillenindustrie ist stark an die Modebranche gekoppelt, weswegen das Design von Brillen Modetrends unterliegt. Diese Trends sind relativ kurzlebig, was eine Planung der Herstellung von Brillen in ausreichender, aber nicht überbordender Anzahl erschwert. In der Regel werden hierfür zu viel Ressourcen eingesetzt, sodass überalterte, nicht mehr aktuellen Modetrends genügende Brillen entsorgt werden müssen, sofern diese nicht auf Drittmärkten angeboten bzw. dort abgesetzt werden können. Somit kann es im schlimmsten Fall dazu kommen, dass aufwendig gefertigte Brillen, teilweise auch bestehend aus Einzelteilen verschiedener Materialien, wieder aufwendig entsorgt werden müssen.

Hier setzt die Erfindung an. Aufgabe der Erfindung ist es, eine Fassung der eingangs genannten Art anzugeben, welche sich mit einem verringerten Aufwand erstellen lässt und dabei so gestaltet ist, dass die Fassung rasch aktuellen Modetrends anpassbar ist.

Weitere Aufgaben der Erfindung bestehen darin, eine Verwendung eines Sets der eingangs genannten Art anzugeben sowie ein Verfahren der eingangs genannten Art derart weiterzubilden, dass sich eine Fassung einer Brille mit einem verringerten Aufwand und rasch aktuellen Modetrends anpassbar erstellen lässt.

Die erste Aufgabe wird gelöst, wenn bei einer Fassung der eingangs genannten Art der Bügel federnd ausgebildet und gelenkfrei am Mittelteil gelagert ist oder der Bügel mit einem federnden Verbindungsteil am Mittelteil gelagert ist.

Durch die erfindungsgemäß vorgesehene Kombination eines Mittelteils mit einem federnd ausgebildeten Bügel, welcher gelenkfrei am Mittelteil gelagert ist, wird eine besonders einfache Ausbildung einer Brille erreicht, die zudem nicht nur rasch herstellbar ist, sondern beim Vorliegen eines Sets aus verschiedenen Mittelteilen einerseits und verschiedenen Bügeln andererseits sehr rasch die Herstellung einer Brille erlaubt. Somit besteht neben einer einfachen Fertigung insbesondere auch die Möglichkeit einer raschen Anpassung einer Fassung an aktuelle oder sich verändernde Modetrends.

Der federnd ausgebildete Bügel kann ebenso wie das Mittelteil beispielsweise durch Laserschneiden erstellt sein, sodass lediglich ein Minimalaufwand hinsichtlich einer Lagerhaltung erforderlich ist und eine einem aktuellen Modetrend entsprechende Brille ohne Weiteres rasch verfügbar gemacht werden kann, wobei auch Variationen verschiedener Mittelteile mit verschiedenen Bügeln rasch erstellbar sind. Der Mittelteil ist vorzugsweise einteilig ausgebildet. Auch der federnde Bügel ist vorzugsweise einteilig ausgebildet, kann aber zur Anlage an einem Ohr einen Überzug aus Kunststoff oder dergleichen aufweisen.

Alternativ ist es unter Erreichung der gleichen Vorteile auch möglich, dass der Bügel mit einem federnden Verbindungsteil am Mittelteil gelagert ist. Der federnde Verbindungsteil ist dabei einteilig ausgebildet oder kann auch Teil des Bügels sein, sodass Bügel und Verbindungsteil zusammen einteilig ausgebildet sind bzw. einen einzelnen Teil bilden. Beispielsweise kann der Bügel zusammen mit dem Verbindungsteil einteilig aus einem Blech gefertigt sein.

Die federnde Wirkung des Bügels und/oder des Verbindungsteils wird vorzugsweise dadurch erreicht, dass der Bügel und/oder der Verbindungsteil aus einem federnden Material gebildet sind. Die federnde Wirkung wird in dieser Ausbildung ohne Schraubenfeder erreicht. Hierfür bietet sich an, insbesondere wenn ein gesonderter Verbindungsteil vorgesehen ist, dass der Verbindungsteil aus einem Blech, insbesondere aus einem ebenen Blech, gefertigt ist. Eine Stärke des Bleches kann beispielsweise 0,1 mm bis 5 mm, vorzugsweise 0,5 mm bis 2 mm, betragen. Der Verbindungsteil kann insbesondere nur aus einem Blech bestehen. Auch wenn Verbindungsteil und Bügel miteinander integral verbunden sind bzw. lediglich ein einziges Teil bilden, kann der Verbindungsteil mit dem Bügel ausschließlich aus einem Blech bestehen. Abgesehen von zusätzlichen Überzügen und Befestigungsmitteln sind dann keine weiteren Teile vorgesehen.

Der Verbindungsteil kann insbesondere bei Fertigung aus einem Blech mit zumindest einer elastisch verformbaren Biegung versehen sein. Die zumindest eine elastisch verformbare Biegung sorgt dafür, dass der Verbindungsteil die notwendige Auslenkung zulässt, gleichzeitig aber auch aufgrund einer Federkraft bei nicht gegebener Auslenkungskraft wieder für eine Rückstellung sorgt. Dies ist sowohl dann der Fall, wenn der Verbindungsteil vom Bügel separiert und mit diesem gesondert über Befestigungsmittel verbunden ist als auch dann, wenn der Verbindungsteil mit dem Bügel integral ausgebildet ist. Die zumindest eine Biegung kann als Umlenkung um 180° gestaltet sein und ist vorzugsweise ohne Kante entlang eines Längsverlaufes des Verbindungsteiles gestaltet. In diesem Fall verläuft der Verbindungteil vor der Biegung gerade, zeigt dann eine Schlaufe und verläuft dann wieder gerade.

Wie erwähnt, kann der Verbindungsteil integral mit dem Bügel ausgebildet sein. Dies kann fertigungstechnisch Vorteile bringen, weil dann der Bügel sowie der Verbindungsteil aus einem Blech ausgeschnitten und durch Anbringung zumindest einer Biegung, welche für die Federwirkung sorgt, auf einfache Weise erstellt werden kann. Die Form des Bügels lässt sich dann durch Laserschneiden oder einen anderen Schneidprozess erstellen und an aktuelle Modetrends anpassen; eine Biegung kann danach insbesondere maschinell erstellt werden. Gegebenenfalls kann der Bügel noch mit einem Überzug versehen werden, insbesondere im Bereich einer Anlagefläche an ein menschliches Ohr.

Zweckmäßig ist es in allen Varianten, dass der Bügel oder der Verbindungsteil einen etwa rechtwinklig abgekanteten Anlagebereich aufweist, der an einer Rückseite der Fassung anliegt und über welchen der Bügel oder der Verbindungsteil an der Rückseite der Fassung befestigt ist. So kann beispielsweise der Verbindungsteil mit der Fassung einfach durch Befestigungsmittel wie beispielsweise zwei Schrauben befestigt werden. Ist der Verbindungsteil integral mit dem Bügel gefertigt, ist dann auch dieser bereits befestigt. Andernfalls ist lediglich der Bügel mit dem Verbindungsteil noch zu verbinden, sodass durch Befestigung in insgesamt zwei oder vier Befestigungsbereichen (bezogen auf zwei Bügel) die Fassung fertig erstellt ist.

Für eine rasche und zweckmäßige Fertigung ist es bevorzugt, dass der Mittelteil und/oder der Bügel und/oder der Verbindungsteil durch Stanzen und/oder Schneiden, insbesondere durch Laserschneiden, erstellt ist. Insbesondere der Verbindungsteil ist durch Schneiden, insbesondere durch Laserschneider erstellt. Sind die bereits erwähnten Biegungen vorgesehen, ist der Verbindungsteil dann einteilig, gegebenenfalls auch einteilig integral mit dem Bügel ausgebildet. Alternativ zu einem Schneiden kann auch ein Ätzen der entsprechenden oder gegebenenfalls aller Teile vorgesehen sein.

Entsprechend den vorangegangenen dargestellten Vorteilen der Erfindung besteht ein weiterer Aspekt der Erfindung in der Verwendung eines Sets aus einer Vielzahl von Mittelteilen und Bügeln sowie optional Verbindungsteilen zur Herstellung einer erfindungsgemäßen Fassung.

Ein derartiges Set bietet den Vorteil, dass eine Fassung rasch und individuell erstellt werden kann, welche aktuellen Modetrends genügt und zudem nur einen minimalen Materialaufwand erfordert. Insbesondere durch die Ausbildung mit einem federnd ausgebildeten Bügel kann auf ein eigenes Gelenk verzichtet werden oder kann dieses alternativ durch ein federndes Verbindungsteil als Federgelenk bereitgestellt werden, sodass sich ein Materialaufwand reduziert darstellt.

Die verfahrensmäßige Aufgabe der Erfindung wird gelöst, wenn bei einem Verfahren der eingangs genannten Art der Bügel federnd ausgebildet und gelenkfrei am Mittelteil gelagert wird oder der Bügel mit einem federnden Verbindungsteil am Mittelteil gelagert wird.

Durch ein entsprechendes Verfahren ergeben sich insbesondere die Vorteile, dass die Fassung rasch, mit minimalem Materialaufwand und zeitlich flexibel sowie individuell anpassbar erstellt werden kann. Insbesondere reduziert sich dadurch ein Materialvorrat sowie ein Materialaufwand, aber auch eine Herstellzeit für eine Fassung im zumindest mittleren Preissegment.

Eine besonders flexible Fertigung ergibt sich, wenn der zumindest eine Bügel und optional der Mitteilteil durch Laserschneiden erstellt werden. Der Mittelteil kann dabei aus einem Metall bzw. einer Legierung gefertigt sein, besteht vorzugsweise aber aus einem nicht verformbaren Kunststoff, beispielsweise aus Celluloseacetat oder dergleichen. Der Bügel und/oder der Verbindungsteil, welche integral miteinander ausgebildet sein können, können aus einem metallischen Material, insbesondere aus Titan, einer Titanlegierung, einer Aluminiumlegierung oder einem Stahl, erstellt werden.

Weitere Merkmale, Vorteile und Wirkungen der Erfindung ergeben sich aus den nachfolgend dargestellten Ausführungsbeispielen. In den Zeichnungen, auf welche dabei Bezug genommen wird, zeigen:
- Fig. 1: eine Brille;
- Fig. 2: einen Bügel;
- Fig. 3: einen weiteren Bügel;
- Fig. 4: einen Verbindungsteil mit einem Bügel.

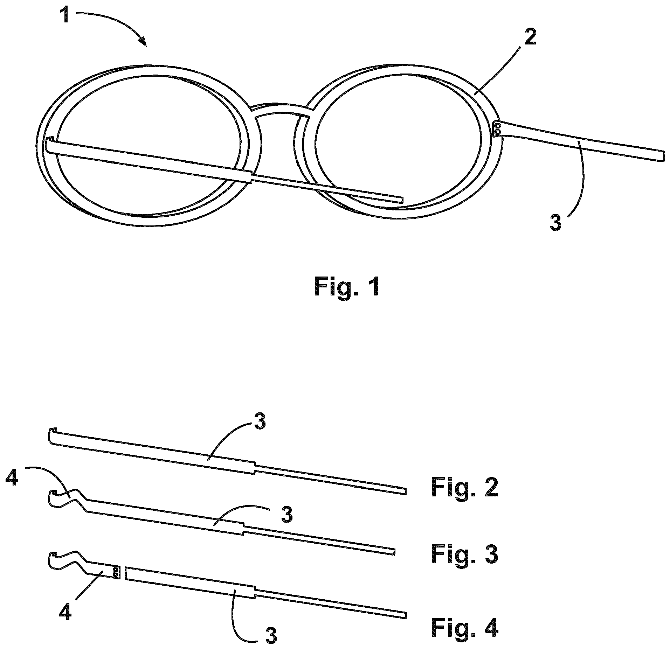

In Fig. 1 ist eine Fassung 1 einer Brille dargestellt. Die Fassung 1 weist einen Mittelteil 2 sowie zwei Bügel 3 auf. Die Bügel 3 sind rückseitig am Mittelteil 2 befestigt, beispielsweise wie ersichtlich durch ein Befestigungsmittel wie jeweils eine oder zwei Schrauben pro Bügel 3. Hierfür sind die Bügel 3 an einem ersten, der Fassung 1 zugewandten Ende etwa rechtwinklig abgekantet, sodass sich im abgekanteten Bereich eine Anlagefläche ergibt, welche an der Rückseite der Fassung 1 anliegen kann und an welcher die Befestigung erfolgen kann. Die Befestigung erfolgt wie erläutert vorzugsweise durch Befestigungsmittel, wenngleich auch eine stoffschlüssige Verbindung möglich ist.

Der Mittelteil 2 ist bevorzugt durch Schneiden erstellt, kann aber grundsätzlich auch auf andere Weise bereitgestellt werden, beispielsweise auch durch Ätzen. Der Mittelteil 2 kann insbesondere durch Laserschneiden erstellt sein. Dies bringt den Vorteil, dass der Mittelteil 2 mit einer beliebigen Form auf Basis von CAD-Daten relativ rasch bzw. "just in time" hergestellt werden kann. Analoges trifft für den oder die Bügel 3 zu, welche vorzugsweise aus einem Blech gefertigt werden, beispielsweise ebenso durch Schneiden wie Laserschneiden oder auch Ätzen, wenngleich auch ein Stanzen hierfür infrage kommt.

Einer der Bügel 3 ist in Fig. 2 näher dargestellt. Der Bügel 3 weist an sich eine übliche Form auf, ist aber aus einem federnden Material gebildet. Dies ermöglicht es, den Bügel 3 in der erläuterten Weise unmittelbar und somit ohne Gelenk am Mittelteil 2 zu befestigen. Die federnde Ausbildung des Bügels 3 als solcher ist dann ausreichend, um einen guten Sitz der Fassung 1 zu erreichen. Darüber hinaus ist insbesondere von Vorteil, dass die Bügel 3 ebenso wie der Mittelteil 2 rasch und bedarfsweise gefertigt werden können, sodass sich auch ästhetisch ansprechende bzw. aktuellen Modetrends genügende Fassungen 1 rasch herstellen lassen und in der Produktion eine hohe Flexibilität gegeben ist. Eine Bevorratung von Brillen, wie dies heute noch üblich ist, erübrigt sich daher zumindest weitgehend.

Geeignete Materialien für die Bügel 3 sind alle jene Materialien, welche eine ausreichende elastische Verformbarkeit aufweist. Hierzu zählen insbesondere Titan oder geeignete Titanlegierungen sowie Aluminiumlegierungen, aber auch diverse Stähle.

In Fig. 3 ist eine weitere Variante eines Bügels 3 dargestellt, die ebenfalls in Kombination mit einem Mittelteil 2 gemäß Fig. 1 verwendbar ist. In diesem Fall weist der Bügel 3 einen integral angefertigten Verbindungsteil 4 auf, welcher, gegebenenfalls wiederum wie dargestellt mit einem abgekanteten Bereich, insbesondere rückseitig an der Fassung 1 bzw. dem Mittelteil 2 befestigbar ist. Möglich ist es dabei auch, wie in Fig. 4 dargestellt, dass der Verbindungsteil 4 vom Bügel 3 separiert, also nicht integral mit diesem ausgebildet ist. In diesem Fall ist eine weitere Befestigung erforderlich, nämlich zwischen dem Verbindungsteil 4 und dem Bügel 3.

Bei den Varianten in Fig. 3 sowie Fig. 4 übernimmt der Verbindungsteil 4 die federnde Wirkung. Hierfür ist der Verbindungsteil 4, der gemäß Fig. 4 auch als gesonderter Teil vorliegen kann, insbesondere mit einer Biegung versehen, welche entlang eines Verlaufs des Verbindungsteiles 4 eine Schlaufe bildet. Dies führt bei der Ausbildung aus einem geeigneten Material dazu, dass der Verbindungsteil 4 wie eine Feder wirkt und der Bügel 3 beim Aufsetzen der Brille ausgelenkt werden kann, dann aber selbsttätig in die Ausgangsposition zurückfedert.

Mit einem erfindungsgemäßen Set an Mittelteilen 2, Bügeln 3 und optional Verbindungsteilen 4 können beliebige Brillen rasch erstellt werden. Dabei ist auch von Vorteil, dass sich bereits die Erstellung der Teile selbst einfach darstellt, weil alle Teile insbesondere durch Laserschneiden erstellt werden können und daher exakt dann gefertigt werden können, wenn eine neue erforderlich ist. Ein Kunde kann eine Brille quasi zusammenstellen und es kann diese dann nach Kundenwunsch erstellt werden. Von Vorteil ist dabei insbesondere eine einfache Lagerung der Bügel 3 am Mittelteil 2. Bevorzugt werden die entsprechenden Teile wie Mittelteil 2 und/oder Bügel 3 nach der Formgebung, insbesondere bei Laserschneiden, noch poliert, beispielsweise in einer Poliertrommel.

## Patentansprüche

1. Fassung (1) einer Brille, wobei die Fassung (1) einen Mittelteil (2) und zumindest einen Bügel (3) aufweist, der mit dem Mittelteil (2) verbunden ist, **dadurch gekennzeichnet, dass** der Bügel (3) federnd ausgebildet und gelenkfrei am Mittelteil (2) gelagert ist oder der Bügel (3) mit einem federnden Verbindungsteil (4) am Mittelteil (2) gelagert ist.

2. Fassung (1) nach Anspruch 1, **dadurch gekennzeichnet, dass** der Bügel (3) und/oder der Verbindungsteil (4) aus einem federnden Material gebildet sind.

3. Fassung (1) nach Anspruch 1 oder 2, **dadurch gekennzeichnet, dass** ein Verbindungsteil (4) vorgesehen ist und der Verbindungsteil (4) aus einem Blech, insbesondere einem ebenen Blech, gefertigt ist.

4. Fassung (1) nach Anspruch 3, **dadurch gekennzeichnet, dass** der Verbindungsteil (4) aus einem Blech besteht.

5. Fassung (1) nach Anspruch 3 oder 4, **dadurch gekennzeichnet, dass** der Verbindungsteil (4) mit zumindest einer elastisch verformbaren Biegung (5) versehen ist.

6. Fassung (1) nach einem der Ansprüche 3 bis 5, **dadurch gekennzeichnet, dass** der Verbindungsteil (4) integral mit dem Bügel (3) ausgebildet ist.

7. Fassung (1) nach einem der Ansprüche 1 bis 6, **dadurch gekennzeichnet, dass** der Bügel (3) oder der Verbindungsteil (4) einen etwa rechtwinklig abgekanteten Anlagebereich (6) aufweisen, der an einer Rückseite der Fassung (1) anliegt und über welchen der Bügel (3) oder der Verbindungsteil (4) an der Rückseite der Fassung (1) befestigt ist.

8. Fassung (1) nach einem der Ansprüche 1 bis 7, **dadurch gekennzeichnet, dass** der Mittelteil (2) und/oder der Bügel (3) und/oder der Verbindungsteil (4) durch Stanzen und/oder Schneiden, insbesondere durch Laserschneiden, erstellt sind.

9. Verwendung eines Sets aus einer Vielzahl von Mitteilteilen (2) und Bügeln (3) sowie optional Verbindungsteilen (4) zur Herstellung einer Fassung (1) nach einem der Ansprüche 1 bis 8.

10. Verfahren zur Herstellung einer Fassung (1) einer Brille, insbesondere einer Fassung (1) nach einem der Ansprüche 1 bis 8, wobei ein Mittelteil (2) und zumindest ein Bügel (3) miteinander verbunden werden, **dadurch gekennzeichnet, dass** der Bügel (3) federnd ausgebildet und gelenkfrei am Mittelteil (2) gelagert wird oder der Bügel (3) mit einem federnden Verbindungsteil (4) am Mittelteil (2) gelagert wird.

11. Verfahren nach Anspruch 1, **dadurch gekennzeichnet, dass** der zumindest eine Bügel (3) und optional das Mittelteil (2) durch Laserschneiden erstellt werden.

12. Verfahren nach Anspruch 10 oder 11, **dadurch gekennzeichnet, dass** das Mittelteil (2) aus einem Kunststoff erstellt wird.

13. Verfahren nach einem der Ansprüche 10 bis 12, **dadurch gekennzeichnet, dass** der zumindest eine Bügel (3) und/oder der Verbindungsteil (4) aus einem metallischen Material, insbesondere Titan oder einer Titanlegierung oder einem Stahl, erstellt wird.
